# EUROPEAN PATENT APPLICATION

(11) **EP 4 822 803 A1**
(43) Date of publication of application: **14.10.2026**
(21) Application number: 24928009.0
(22) Date of filing: 14.08.2024
(51) Int. Cl.: H01M 10/0568, H01M 10/0525, H01M 10/052, H01M 4/13, H01M 4/66

(54) **BATTERY CELL, BATTERY, AND ELECTRIC DEVICE**

(30) Priority: 08.03.2024 CN 202410269602
(71) Applicant: Contemporary Amperex Technology Co., Limited, Ningde, Fujian 352100 (CN)
(72) Inventor: LI, Wei, Ningde, Fujian 352100 (CN); ZHANG, Zige, Ningde, Fujian 352100 (CN); XUE, Qingrui, Ningde, Fujian 352100 (CN); ZHANG, Yu, Ningde, Fujian 352100 (CN); ZHANG, Jinsong, Ningde, Fujian 352100 (CN); ZHAO, Zhengyuan, Ningde, Fujian 352100 (CN)
(74) Representative: Ziebig Hengelhaupt Intellectual Property Attorneys Patentanwaltskanzlei PartGmbB
(86) International application number: PCT/CN2024/112128
(87) International publication number: WO 2025/185078

(57) **Abstract**

The present application relates to a battery cell, a battery, and an electric device. The battery cell comprises: an electrolyte solution, the electrolyte solution containing an electrolyte salt, and the electrolyte salt comprising a salt capable of releasing free halogen ions during use of the battery cell; and a positive electrode sheet, the positive electrode sheet comprising a composite current collector and a positive electrode film layer provided on at least one side of the composite current collector, wherein the composite current collector comprises a supporting layer and a metal layer arranged on at least one side of the supporting layer, a protective layer is arranged on at least one side of the metal layer, and the protective layer comprises a metal oxide. The battery cell can achieve both good service life and power performance.

## Description

### CROSS-REFERENCE TO RELATED APPLICATIONS

The present application claims priority to Chinese Patent Application No. 2024102696020, entitled "BATTERY CELL, BATTERY, AND ELECTRIC DEVICE" filed with the China National Intellectual Property Administration on March 8, 2024, which is incorporated by reference in its entirety.

### TECHNICAL FIELD

The present application relates to the field of battery technologies, and in particular, to a battery cell, a battery, and an electric device.

### BACKGROUND

The statement herein merely provides background information related to the present application and does not necessarily constitute the prior art.

In recent years, with the wide application range of lithium-ion batteries, the lithium-ion batteries are widely used in energy storage power systems such as hydropower, thermal power, wind power, and solar power stations, as well as the fields such as power tools, electric bicycles, electric motorcycles, electric vehicles, military equipment, aerospace, and the like. Correspondingly, higher requirements are put forward for the life and power performance of batteries. Therefore, how to improve the life and power performance of batteries has become an urgent technical problem to be resolved at present.

### SUMMARY

The present application is made in view of the foregoing problems. One of objectives of the present application is to provide a battery cell, a battery, and an electric device, which achieve better life and power performance.

To achieve the foregoing objective, a first aspect of the present application provides a battery cell, including:
an electrolyte, where the electrolyte contains an electrolyte salt, and the electrolyte salt includes a salt capable of releasing free halogen ions during use of the battery cell; and
a positive electrode sheet, where the positive electrode sheet includes a composite current collector and a positive electrode film layer arranged on at least one side surface of the composite current collector, the composite current collector includes a supporting layer and a metal layer arranged on at least one side of the supporting layer, a protective layer is arranged on at least one side surface of the metal layer, and the protective layer includes a metal oxide.

In view of the problem that the free halogen ions cause corrosion to the metal layer of the composite current collector in a system where the electrolyte contains the free halogen ions and the positive electrode sheet adopts the composite current collector, the battery cell of the present application is provided with the protective layer containing the metal oxide on the metal layer. Since the metal oxide in the protective layer has a lower corrosion rate by the free halogen ions in the electrolyte than the metal layer, the metal layer can be protected to some extent and inhibit the corrosion rate of the metal layer, thereby preserving the current-carrying capacity of the composite current collector. Meanwhile, the advantages of such an electrolyte in prolonging the cycle life of the battery can be exerted, and the composite current collector, in comparison with a pure aluminum foil, is conducive to increasing the mass energy density of the battery. Therefore, the battery cell of the present application can achieve high mass energy density, good cycle performance, and good power performance.

In any implementation of the present application, the electrolyte salt in the electrolyte has a concentration of 0.5 mol/L to 2 mol/L.

In any implementation of the present application, the electrolyte salt in the electrolyte has a concentration of 1 mol/L to 1.5 mol/L.

In any implementation of the present application, the protective layer has a thickness of 3 nm to 100 nm.

In any implementation of the present application, the protective layer has a thickness of 5 nm to 50 nm.

In any implementation of the present application, the protective layer has a thickness of 15 nm to 45 nm.

In any implementation of the present application, the metal oxide includes at least one of aluminum oxide, tin oxide, or silicon oxide.

In any implementation of the present application, two side surfaces of the metal layer are separately provided with the protective layer. The protective layer on a surface of the metal layer facing away from the supporting layer is a first protective layer, and the first protective layer has a thickness of D1. The protective layer on a surface of the metal layer facing the supporting layer is a second protective layer, and the second protective layer has a thickness of D2, where D1≥D2.

The first protective layer is closer to the positive electrode film layer and thus more susceptible to corrosion by the free halogen ions in the electrolyte, requiring a protective layer with a same or larger thickness. Further controlling a smaller thickness of the second protective layer can effectively reduce the corrosion rate while reducing the overall thickness of the composite current collector.

In any implementation of the present application, the protective layer on the surface of the metal layer facing away from the supporting layer is a first protective layer. The positive electrode film layer is arranged on the first protective layer. A volume-average particle size Dv50 of a positive electrode active material in the positive electrode film layer is larger than the thickness of the first protective layer. At least part of the positive electrode active material in the positive electrode film layer penetrates the first protective layer. In this way, the bonding strength between the positive electrode film layer and the composite current collector can be improved.

In any implementation of the present application, the composite current collector has recessed portions recessed from the first protective layer toward the supporting layer. The volume-average particle size Dv50 of the positive electrode active material is less than or equal to an average depth of the recessed portions. At least part of the recessed portions are filled with the positive electrode active material.

With this arrangement, at least half of the positive electrode active material at an interface between the positive electrode film layer and the composite current collector can be embedded in the recessed portion, and the bonding force between the positive electrode active material and the first protective layer further enhances the bonding force between the positive electrode film layer and the composite current collector. The risk of peeling between the positive electrode film layer and the composite current collector during battery cycling, thereby further improving the cycle performance of the battery.

In any implementation of the present application, the material of the metal layer includes an aluminum metal material.

In any implementation of the present application, the metal layer includes at least one of an aluminum elementary substance layer or an aluminum alloy layer.

In any implementation of the present application, the metal layer has a thickness of 500 nm to 4000 nm.

In any implementation of the present application, the metal layer has a thickness of 700 nm to 1500 nm.

Controlling the thickness of the metal layer in the composite current collector within the foregoing range in this manner further enhances the current-carrying capacity and corrosion resistance of the composite current collector, which in turn further improves the cycle performance of the battery.

In any implementation of the present application, the free halogen ions include at least one of F⁻, Cl⁻, Br⁻, or I⁻.

In any implementation of the present application, the electrolyte salt includes a fluorine-containing lithium salt.

In any implementation of the present application, the fluorine-containing lithium salt includes one or more of lithium hexafluorophosphate, lithium bis(fluorosulfonyl)imide, lithium tetrafluoroborate, lithium hexafluoroarsenate, lithium bis(trifluoromethanesulfonyl)imide, lithium trifluoromethanesulfonate, lithium difluorophosphate, lithium difluorooxalate borate, lithium difluorodioxalate phosphate, or lithium tetrafluorooxalate phosphate.

In any implementation of the present application, the material of the supporting layer includes a polymer material.

In any implementation of the present application, the supporting layer has a thickness of 5 µm to 20 µm.

In any implementation of the present application, the battery cell includes a housing, a negative electrode sheet, and a separator. The positive electrode sheet, the negative electrode sheet, and the separator form an electrode assembly through a winding process or a lamination process. The housing is configured to accommodate the electrode assembly.

In any implementation of the present application, the housing is in the shape of a square. The housing includes a case and at least one end cover.

The case has an opening at only one end, and the end cover covers the opening; or the case has openings at both ends, and the two end covers cover the two openings of the case respectively.

In any implementation of the present application, the housing is of a pouch-type structure. The material of the housing includes an aluminum-plastic film.

In any implementation of the present application, the housing is in the shape of a cylinder. The housing includes a case and at least one end cover. The end cover covers an opening of the case. An outer diameter of the cylinder is greater than or equal to 30 millimeters.

A second aspect of the present application further provides a battery, including one or more battery cells provided by the first aspect of the present application.

A third aspect of the present application further provides an electric device, including at least one of the battery cell provided by the first aspect of the present application or the battery provided by the second aspect of the present application.

Details of one or more embodiments of this application are provided in the accompanying drawings and descriptions below. Other features, objectives, and advantages of the present application become apparent from the specification, the drawings, and the claims.

### BRIEF DESCRIPTION OF THE DRAWINGS

To describe the technical solutions of embodiments of the present application or the conventional art more clearly, the following briefly introduces the accompanying drawings required for describing the embodiments or the conventional art. Apparently, the accompanying drawings in the following description show only the embodiments of the present application, and a person of ordinary skill in the art may still derive other drawings from the disclosed drawings without creative efforts.
FIG. 1 is a schematic diagram of a battery according to an implementation of the present application;
FIG. 2 is a schematic diagram of a developed cross-sectional structure of a composite current collector of a positive electrode sheet in the battery shown in FIG. 1;
FIG. 3 is a schematic diagram of a developed cross-sectional structure of a composite current collector of a positive electrode sheet in another implementation;
FIG. 4 is an exploded view of the battery shown in FIG. 1 according to an implementation of the present application;
FIG. 5 is a schematic diagram of a battery module according to an implementation of the present application;
FIG. 6 is a schematic diagram of a battery pack according to an implementation of the present application;
FIG. 7 is an exploded view of the battery pack shown in FIG. 7 according to an implementation of the present application; and
FIG. 8 is a schematic diagram of an electric device using a battery as a power supply according to an implementation of the present application.

Descriptions of reference numerals:
1: battery pack; 2: upper box body; 3: lower box body; 4: battery module; 5: battery cell; 51: case; 52: electrode assembly; 53: cover plate; 6: electric device; 7: composite current collector; 71: supporting layer; 72: metal layer; and 73: protective layer.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of the present application without creative efforts shall fall within the protection scope of the present application.

A "range" disclosed in the present application is defined in a form of a lower limit and an upper limit. A given range is defined by selecting a lower limit and an upper limit, and the selected lower limit and upper limit define boundaries of a particular range. A range defined in this manner may be inclusive or exclusive of the end values, and any end value may be independently inclusive or exclusive and may be arbitrarily combined, that is, any lower limit may be combined with any upper limit to form a range. For example, if ranges of 60-120 and 80-110 are listed for a particular parameter, it is to be understood that ranges of 60-110 and 80-120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a to b, where both a and b are real numbers. For example, the numerical range "0 to 5" represents that all real numbers between 0 and 5 are listed herein, and "0 to 5" is merely the abbreviated representation of the combination of these numbers. In addition, when a parameter is expressed as an integer greater than or equal to 2, it is equivalent to disclosing that the parameter is an integer such as 2, 3, 4, 5, 6, 7, 8, 9, 10, 11, 12, or the like.

For example, when a parameter is expressed as an integer selected from "2 to 10", it is equivalent to listing integers 2, 3, 4, 5, 6, 7, 8, 9, and 10.

In the present application, references to "a plurality of", "multiple", etc., unless specifically defined otherwise, mean a quantity greater than 2 or equal to 2. For example, "one or more" means one or not less than two.

Unless otherwise specified, all implementations and optional implementations of the present application may be combined with each other to form new technical solutions.

Reference herein to "an embodiment" means that a particular feature, structure, or characteristic described in connection with the embodiment may be included in at least one embodiment or implementation of the present application. The term appearing at different positions of the specification may not necessarily refer to the same embodiment or an independent or alternative embodiment that is mutually exclusive with another embodiment. A person skilled in the art explicitly or implicitly understands that the embodiments described in the specification may be combined with other embodiments. "Implementations" mentioned herein are understood similarly.

A person skilled in the art may understand that, in the method in implementations or embodiments, a writing order of the steps does not imply a strict order of execution and does not impose any limitation on an implementation process, and a specific execution order of the steps should be determined according to functions and possible internal logic of the steps. Unless otherwise specified, all the steps in the present application may be performed in the order or in a random order, and preferably in the order. For example, a method includes steps (a) and (b), meaning that the method may include steps (a) and (b) performed sequentially, or may include steps (b) and (a) performed sequentially. For example, that "the method may further include step (c)" indicates that step (c) may be added to the method in any order. For example, the method may include step (a), step (b), and step (c), may include step (a), step (c), and step (b), or may include step (c), step (a), and step (b).

In the present application, for open-ended technical features or technical solutions described using terms such as "containing", "comprising", and "including", unless otherwise specified, additional members beyond the listed members are not excluded. It may be deemed to provide both closed-ended features or solutions consisting solely of the listed members and open-ended features or solutions that include additional members beyond the listed members. For example, if "A includes a1, a2, and a3", unless otherwise specified, other members may be included, and additional members may not be included. It may be deemed to provide both a feature or solution "A consists of a1, a2, and a3", and a feature or solution "A includes not only a1, a2, and a3, but also other members".

In the present application, unless otherwise specified, A (e.g., B) indicates that B is a non-limiting example of A. It may be understood that A is not limited to B.

In the present application, the terms "optionally", "optional", and "option" refer to either presence or absence. In other words, the terms refer to a choice between two mutually exclusive options: "present" or "absent". If there are multiple "options" in one technical solution, unless otherwise specified and there are no contradictions or mutual constraints, each "option" is independent.

To resolve the technical problem of how to improve the mass energy density and cycle life of batteries, one technical improvement direction is to replace a traditional pure metal layer with a composite current collector as a current collector. The composite current collector generally includes a supporting layer in the middle and a metal layer arranged on one or two sides of the supporting layer. The composite current collector enables the development of thinner and lighter current collectors. On the one hand, the thickness of the metal layer can be greatly reduced, and the metal usage and costs can be reduced. On the other hand, the mass proportion of active materials can be improved while reducing the weight of the current collector, thereby improving the mass energy density of batteries in multiple aspects. However, as the thickness of the metal layer is reduced, the corrosion resistance of the composite current collector is also significantly reduced. When the battery comes into contact with corrosive agents such as hydrofluoric acid (HF), the composite current collector will be corroded, which will seriously affect the current-carrying capacity of the battery. Insufficient current-carrying capacity of the battery will in turn lead to a significant impact in the cycle life of the battery. If a cell continues to be used when the battery has insufficient current-carrying capacity, there may be particular potential safety hazards. For example, when the current exceeds a bearable range of the battery, excessive heat will be generated inside the battery, which may even cause safety accidents such as fire.

For example, when a metal layer in a composite current collector of a positive electrode sheet is corroded and damaged, which in turn causes a short circuit between the metal layer in a damaged region and a negative electrode sheet and triggers a series of side reactions. In severe cases, reaction debris of the metal layer can cause an internal short circuit, or even pierce through the composite current collector and result in battery failure. Therefore, the corrosion of the metal layer is an important cause of the attenuation of the long-term cycle performance of the battery.

Based on this, in an implementation of the present application, a battery is provided, including a positive electrode sheet, a negative electrode sheet, and an electrolyte.

The electrolyte contains an electrolyte salt. The electrolyte salt includes a salt capable of releasing free halogen ions during use of the battery cell. The positive electrode sheet includes a composite current collector and a positive electrode film layer arranged on at least one side surface of the composite current collector. The composite current collector includes a supporting layer and a metal layer arranged on at least one side of the supporting layer. A protective layer is arranged on at least one side surface of the metal layer. The protective layer includes a metal oxide.

Without wishing to be bound by any theory, in view of the problem that the free halogen ions cause corrosion to the metal layer of the composite current collector in a system where the electrolyte contains the free halogen ions and the positive electrode sheet adopts the composite current collector, the battery cell of the present application is provided with the protective layer containing the metal oxide on the metal layer. Since the metal oxide in the protective layer has a lower corrosion rate by the free halogen ions in the electrolyte than the metal layer, the metal layer can be protected to some extent and inhibit the corrosion rate of the metal layer, thereby preserving the current-carrying capacity of the composite current collector. Meanwhile, the advantages of such an electrolyte in prolonging the cycle life of the battery can be exerted, and the composite current collector, in comparison with a pure aluminum foil, is conducive to increasing the mass energy density of the battery. Therefore, the battery cell of the present application can achieve high mass energy density, good cycle performance, and good power performance.

The thickness of each film layer of the composite current collector including the protective layer may be measured by testing the thickness cross-section of the current collector with a scanning electron microscope and testing the thickness of each film layer. In some examples, the observation may be conducted under a scanning electron microscope at a magnification of 1000 to 30000 times.

It may be understood that the supporting layer has two opposite surfaces in a thickness direction thereof. The metal layer may be arranged on one or both of the two surfaces of the supporting layer.

In some implementations, the composite current collector further includes a bonding layer. The bonding layer is arranged between the supporting layer and a conductive layer for bonding the two layers. In some implementations, the bonding layer has a thickness of 200 nm to 1500 nm. It may be understood that the thickness of the bonding layer includes, but is not limited to, 200 nm, 400 nm, 600 nm, 800 nm, 1000 nm, 1200 nm, or 1500 nm.

In some implementations, the bonding layer contains a binder. The binder includes one or more of polyurethane, epoxy resin, polyacrylate, polyvinyl acetate, unsaturated polyester, phenolic resin, urea-formaldehyde resin, polyolefin resin, silicone resin, ethyleneacrylic acid copolymer, ethylene-vinyl acetate copolymer, ethylene-vinyl alcohol copolymer, acrylic resin, polycarbonate, or polyamide.

It may be understood that the protective layer may be arranged on the surface of one or two sides of the metal layer. It may be understood that the protective layer may alternatively be arranged at another position besides the foregoing position. For example, in some examples, the protective layer is arranged on the entire surface of the metal layer (i.e., the protective layer encapsulates the metal layer). These protective layers can reduce the corrosion rate of the metal layer by halogen ions such as hydrofluoric acid (HF).

It is worth noting that, for example, when the protective layers are arranged on the surfaces of two sides of the metal layer in the thickness direction, the thickness of the protective layer refers to the thickness of a single protective layer on one side of the metal layer, rather than the sum of the thicknesses of the two protective layers on the two side surfaces of the metal layer.

Further, two side surfaces of the metal layer are separately provided with the protective layer. The protective layer on a surface of the metal layer facing away from the supporting layer is a first protective layer. Since the surface of the metal layer away from the supporting layer is closer to the positive electrode film layer, it is more susceptible to corrosion by the free halogen ions in the electrolyte, and the arrangement of the first protective layer on this surface can effectively inhibit the corrosion of the metal layer.

Further, the protective layer on a surface of the metal layer facing the supporting layer is a second protective layer. Since the positive electrode sheet is wet by the electrolyte during the use of the battery cell, the surface of the metal layer opposite to the supporting layer may be wet by the electrolyte and thus corroded by the free halogen ions in the electrolyte, and the arrangement of the second protective layer on this surface can also inhibit the corrosion of this surface of the metal layer. In addition, the second protective layer may further enhance the bonding force between the metal layer and the supporting layer.

Further, the first protective layer has a thickness of D1, and the second protective layer has a thickness of D2, where D1≥D2. This is because the first protective layer is closer to the positive electrode film layer and thus more susceptible to corrosion by the free halogen ions in the electrolyte, requiring a protective layer with a same or larger thickness. Further controlling a smaller thickness of the second protective layer can effectively reduce the corrosion rate while reducing the overall thickness of the composite current collector.

Further, D1 is 3 nm to 100 nm.

Further, D2 is 3 nm to 100 nm.

It may be understood that the composite current collector in the positive electrode sheet has two opposite surfaces in a thickness direction thereof. The positive electrode film layer is arranged on either or both of the two opposite surfaces of the composite current collector.

Further, a volume-average particle size Dv50 of a positive electrode active material is larger than the thickness of the first protective layer D1. Further, at least part of the positive electrode active material in the positive electrode film layer penetrates the first protective layer. In this way, the bonding strength between the positive electrode film layer and the composite current collector can be improved.

Further, the composite current collector has recessed portions recessed from the first protective layer toward the supporting layer. The volume-average particle size Dv50 of the positive electrode active material is less than or equal to an average depth of the recessed portions. In this way, at least half of the positive electrode active material at an interface between the positive electrode film layer and the composite current collector can be embedded in the recessed portion, and the bonding force between the positive electrode active material and the first protective layer further enhances the bonding force between the positive electrode film layer and the composite current collector. The risk of peeling between the positive electrode film layer and the composite current collector during battery cycling, thereby further improving the cycle performance of the battery.

Further, the volume-average particle size Dv50 of the positive electrode active material is 5 µm to 12 µm. For example, the volume-average particle size Dv50 of the positive electrode active material may be 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, or 12 µm.

It may be understood that the first protective layer at the recessed portion may be either non-continuous or continuous. Further, the first protective layer at the recessed portion is non-continuous, and the positive electrode active material is arranged in the recessed portion. To be specific, the positive electrode active material penetrates the first protective layer. Further, the positive electrode active material is embedded in at least part of the recessed portions.

Dv50 has a meaning well-known in the art, and may be measured using a method known in the art. For example, it is determined using a laser particle size analyzer (e.g., Malvern Master Size 3000). Dv50 refers to a particle size corresponding to a cumulative 50% volume distribution percentage of particles from the side of small particle sizes, in accordance with a particle size volume distribution.

The particle size volume distribution may be obtained by the following test method: taking a clean beaker, adding an appropriate amount of to-be-tested sample, and performing sufficient ultrasonic treatment to ensure complete dispersion of the sample. The test instrument is Malvern Master Size 2000. After the sample is poured into a sample feeding tower, the sample circulates with a solution to a test optical path system. Under the irradiation of a laser beam, particle size distribution features of particles may be obtained by receiving and measuring the energy distribution of scattered light (obscuration: 8-12%). A particle size volume distribution curve is plotted according to test data.

In the present application, the average depth of the recessed portions is tested by the following method:
1) Sample preparation: a. Randomly select an electrode sheet, cut the electrode sheet into strips having a width of about 5 mm, and soak the strips in liquid nitrogen for 10 min; b. Take out the strips with tweezers and snap the strips off rapidly with a cutter to form a cross-section perpendicular to a length direction, and attach a surface non-contact with a cutter edge upwards to a piece of A4 paper for subsequent use; c. Cut the cross-section and adhere it to a strip-shaped sample stage with a conductive adhesive, with the cross-section slightly protruding from an edge of the sample stage (<1 mm), and finally, place the strips upright on a sample holder of a scanning electron microscope (SEM).
2) Parameter setting: setting the SEM to an In-lens mode, with a voltage of 10 KV, an aperture of 30 µm, and a working distance of 4.5 mm.
3) Test procedure: searching for recessed portions in the electrode sheet at a magnification of about 3K, capturing images at magnifications of 30 K, 10 K, and 5 K 1*K*=1000 respectively, randomly selecting recessed portions at 12 positions, measuring a depth of each recessed portion, and then calculating an average value to obtain an average depth of the recessed portions.

In some implementations, the step of forming a composite current collector including recessed portions includes: pressing the composite current collector using a patterned work roll. For example, the composite current collector may be roll-pressed using a grooved roll pair to form the recessed portions.

In another implementation of the present application, a method for preparing a positive electrode sheet containing recessed portions of the present application includes the following steps:
arranging an electrode slurry containing an electrode active material on at least one side of a composite current collector, and drying the slurry to form a positive electrode film layer; and
applying pressure to the positive electrode film layer to form recessed portions, and embedding the electrode active material in at least part of the recessed portions.

In some implementations, the step of applying pressure to the positive electrode film layer includes: pressing the positive electrode film layer, such as a cold pressing treatment after coating and drying the slurry.

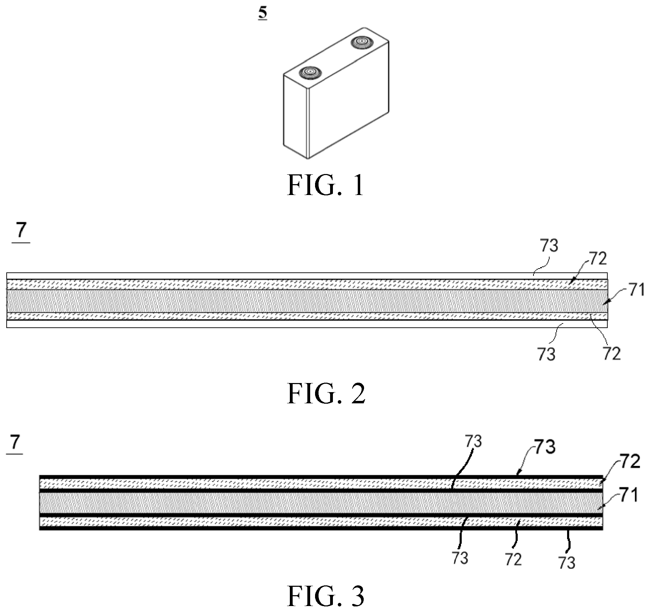

Refer to FIG. 1 and FIG. 2. FIG. 1 shows a schematic diagram of a battery according to an implementation of the present application, and FIG. 2 shows a schematic diagram of a developed cross-sectional structure of a composite current collector of a positive electrode sheet in the battery shown in FIG. 1. A positive electrode sheet in a battery 5 includes a composite current collector 7 and positive electrode film layers (not shown) arranged on two surfaces of the composite current collector 7. The composite current collector 7 includes a supporting layer 71, metal layers 72 arranged on two surfaces of the supporting layer 71, and protective layers 73 arranged on two side surfaces of the two metal layers 72 in a thickness direction.

FIG. 3 shows a schematic diagram of a developed cross-sectional structure of a composite current collector of a positive electrode sheet in another implementation. The composite current collector 7 includes a supporting layer 71, metal layers 72 arranged on two surfaces of the supporting layer 71, and protective layers 73 arranged on two surfaces of the two metal layers 72 that face toward and away from the supporting layer 71 (i.e., two side surfaces of the metal layers 71 in a thickness direction). In other words, the composite current collector 7 includes a supporting layer 71, and protective layers 73, metal layers 72 and protective layers 73 which are sequentially arranged on two surfaces of the supporting layer 71.

Further, the protective layer includes a metal oxide. The metal oxide includes at least one of aluminum oxide, tin oxide, or silicon oxide. Further, the protective layer is a metal oxide layer. The metal oxide in the protective layer of the composite current collector can react with hydrohalic acids such as hydrofluoric acid (HF) to form metal halides such as metal fluoride (AlF₃), and the metal halides can further reduce the corrosion rate of the metal layer inside the protective layer by the hydrohalic acids.

Further, the protective layer has a thickness of 3 nm to 100 nm. For example, the thickness may be 3 nm, 4 nm, 5 nm, 10 nm, 15 nm, 20 nm, 25 nm, 30 nm, 40 nm, 50 nm, 60 nm, 70 nm, 80 nm, 90 nm, or 100 nm. Controlling the thickness of the protective layer to be more than 3 nm can improve the coverage and compactness of the protective layer and enhance the protective performance of the protective layer. The thickness is controlled to be less than 100 nm since the thickness increase of the protective layer will increase the resistivity of the composite current collector and the internal resistance of the battery, thereby affecting the battery performance. By controlling the thickness of the protective layer within this range, the composite current collector can have both a low corrosion risk and an appropriate resistivity, thus achieving excellent electrical conductivity for the composite current collector. Furthermore, the thickness of the protective layer is 5 nm to 50 nm or 15 nm to 45 nm, which enables the composite current collector to further have both a lower corrosion risk and a more appropriate resistivity. Furthermore, the thickness of the protective layer is 18 nm to 42 nm or 20 nm to 40 nm.

It is worth noting that, for example, when the protective layers are arranged on the surfaces of two sides of the metal layer in the thickness direction, the thickness of a single protective layer refers to the thickness of a single protective layer on one side of the metal layer, rather than the sum of the thicknesses of the two protective layers on the two side surfaces of the metal layer.

It may be understood that the protective layer may be formed on the metal layer by coating, evaporation deposition, chemical vapor deposition, or other methods, or may be bonded to the metal layer via a bonding layer. Optionally, the protective layer is formed on the metal layer by evaporation deposition, chemical vapor deposition, or other methods.

In some embodiments, a molar concentration of the electrolyte salt in the electrolyte is 0.5 mol/L to 2 mol/L, for example, 0.5 mol/L, 0.6 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, or 2 mol/L. Controlling the molar concentration of the electrolyte salt in the electrolyte can further endow the electrolyte with favorable properties such as high conductivity, which is conducive to further improving the cycle life and power performance of the battery. Meanwhile, the problem that an excessively high molar concentration of the electrolyte salt in the electrolyte generates more hydrohalic acid and increases the risk of corrosion of the composite current collector can be avoided, thereby helping to improve the corrosion resistance of the composite current collector in the battery. Optionally, the molar concentration of the electrolyte salt in the electrolyte is 1 mol/L to 1.5 mol/L, and further 1.1 mol/L to 1.5 mol/L.

Further, the concentration of the electrolyte salt in the electrolyte is 0.5 mol/L to 2 mol/L. The thickness of the protective layer is 3 nm to 100 nm. The concentration of the electrolyte salt in the electrolyte and the thickness of the protective layer are further controlled to achieve mutual restriction and balance, thus preventing the electrolyte in the battery from severely corroding the metal layer of the composite current collector, and protecting the current-carrying capacity of the composite current collector. Meanwhile, the advantages of such an electrolyte in prolonging the cycle life of the battery can be exerted, and the composite current collector, in comparison with a pure aluminum foil, is conducive to increasing the mass energy density of the battery. Therefore, the battery of the present application can achieve both high mass energy density and good cycle performance.

In some embodiments, the free halogen ions include at least one of F⁻, Cl⁻, Br⁻, or I⁻. As mentioned above, these free halogen ions are generally provided by the electrolyte salt in the electrolyte.

Further, among the free halogen ions, F⁻ is the most commonly used and has the strongest corrosive effect in the electrolyte. The electrolyte salt capable of releasing the free halogen ions includes, but is not limited to, hexa-halophosphates such as lithium hexahalophosphate. Hydrolysis of lithium hexafluorophosphate releases HF, and HF contains free F⁻.

In some embodiments, the concentration of the free halogen ions in the electrolyte is 0.5 mg/L to 200 mg/L, for example, 0.5 mg/L, 1 mg/L, 2 mg/L, 5 mg/L, 10 mg/L, 15 mg/L, 20 mg/L, 25 mg/L, 30 mg/L, 40 mg/L, 50 mg/L, 60 mg/L, 80 mg/L, 100 mg/L, 120 mg/L, 150 mg/L, 160 mg/L, 180 mg/L, or 200 mg/L. Further, the concentration of the free halogen ions in the electrolyte is 0.5 mg/L to 50 mg/L. Controlling the concentration of the free halogen ions in the electrolyte within the foregoing range enables the electrolyte to have a good ability to transport active ions, and can reduce the rate of corrosion of the metal layer of the composite current collector by hydrohalic acid, which is conducive to further improving the cycle life and power performance of the battery cell.

Further, the electrolyte salt includes a fluorine-containing lithium salt. The fluorine-containing lithium salt includes, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluorooxalate borate (LiDFOB), lithium dioxalate borate (LiBOB), lithium difluorodioxalate phosphate (LiDFOP), or lithium tetrafluorooxalate phosphate (LiTFOP).

Further, the fluorine-containing lithium salt includes lithium hexafluorophosphate, and further includes one or more of optional lithium bis(fluorosulfonyl)imide, lithium tetrafluoroborate, lithium hexafluoroarsenate, lithium bis(trifluoromethanesulfonyl)imide, lithium trifluoromethanesulfonate, lithium difluorophosphate, lithium difluorooxalate borate, lithium difluorodioxalate phosphate, or lithium tetrafluorooxalate phosphate.

In some embodiments, the molar concentration of the fluorine-containing lithium salt in the electrolyte is 0.5 mol/L to 2 mol/L, for example, 0.5 mol/L, 0.6 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, or 2 mol/L.

In some embodiments, the material of the metal layer includes a metal material. The metal material includes, but is not limited to, an aluminum metal material. Further, the metal layer includes at least one of an aluminum elementary substance layer or an aluminum alloy layer. It may be understood that the metal layer may include a laminate of an aluminum elementary substance layer and an aluminum alloy layer.

In some embodiments, the thickness of the metal layer in the composite current collector is 500 nm to 4000 nm, for example, 500 nm, 600 nm, 700 nm, 800 nm, 900 nm, 1000 nm, 1500 nm, 1800 nm, 2000 nm, 2200 nm, 2500 nm, 3000 nm, 3500 nm, or 4000 nm. A range may be constituted by any two of the foregoing point values as end values, and the same applies hereinafter. Controlling the thickness of the metal layer in the composite current collector within the foregoing range in this manner further enhances the current-carrying capacity and corrosion resistance of the composite current collector, which in turn further improves the cycle performance of the battery. The thickness of a traditional pure metal layer current collector is generally about 10 µm. For example, a traditional positive electrode current collector generally adopts a pure aluminum foil having a thickness of 13 µm. By controlling the thickness of the metal layer in the composite current collector within the foregoing range in the present application, the composite current collector can not only have excellent electrical conductivity and reduce the internal resistance of the battery, but also improve the mass energy density of the battery based on the same weight.

Further, the thickness of the metal layer in the composite current collector is 700 nm to 2000 nm, further 700 nm to 1500 nm, and furthermore 1200 nm to 1400 nm.

In some embodiments, the material of the supporting layer includes a polymer material. Further, the polymer material includes, but is not limited to, one or more of polyamide, polyimide, polyethylene terephthalate, polybutylene terephthalate, polyethylene naphthalate, polycarbonate, polyethylene, polypropylene, polystyrene-propylene, acrylonitrile-butadienestyrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polythiazyl polymer materials, polyphenylene, polypyrrole, polyaniline, polythiophene, polypyridine, cellulose, starch, protein, epoxy resin, phenolic resin, derivatives thereof, crosslinked products thereof, or copolymers thereof.

In some embodiments, the material of the supporting layer is a polymer material. Correspondingly, the supporting layer is a polymer material layer.

In some embodiments, the material of the supporting layer includes, in addition to the polymer material, some additives to form a polymer-based composite material. Correspondingly, the supporting layer is a polymer-based composite material layer. The additives include one or more of metal materials or inorganic non-metal materials. Optionally, the metal materials include one or more of aluminum, nickel, iron, silver, titanium, or alloys thereof. Optionally, the inorganic non-metal materials include one or more of graphite, conductive carbon, aluminum oxide, silicon oxide, silicon carbide, or silicon dioxide.

Further, the thickness of the supporting layer is 5 µm to 20 µm, for example, 5 µm, 6 µm, 7 µm, 8 µm, 9 µm, 10 µm, 11 µm, 12 µm, 15 µm, 16 µm, 18 µm, or 20 µm, and further 5 to 12 µm.

Further, the positive electrode film layer in the positive electrode sheet includes a positive electrode active material.

Non-limiting examples of the composite current collector in the positive electrode sheet have two opposite surfaces in a thickness direction thereof. The positive electrode film layer is arranged on either or both of the two opposite surfaces of the composite current collector.

In some implementations, the positive electrode active material may be a positive electrode active material well known in the art for batteries.

For example, the positive electrode active material may include at least one of the following lithium-ion active materials: a lithium-containing phosphate with an olivine structure, a lithium transition metal oxide, and respective modified compounds thereof. However, the present application is not limited to these materials, and other conventional materials usable as positive electrode active materials for batteries may be used. These positive electrode active materials may be used alone or in combination of two or more. Examples of the lithium transition metal oxide include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (or briefly referred to as NCM₃₃₃), LiNi_{0.5}Co_{0.2}Mn_{0.3}O₂ (or briefly referred to as NCM₅₂₃), LiNi_{0.5}Co_{0.25}Mn_{0.25}O₂ (or briefly referred to as NCM₂₁₁), LiNi_{0.6}Co_{0.2}Mn_{0.2}O₂ (or briefly referred to as NCM₆₂₂), LiNi_{0.8}Co_{0.1}Mn_{0.1}O₂ (or briefly referred to as NCM₈₁₁)), lithium nickel cobalt aluminum oxide (e.g., LiNi_{0.85}Co_{0.15}Al_{0.05}O₂), and modified compounds thereof. Examples of the lithium-containing phosphate with the olivine structure may include, but are not limited to, at least one of lithium iron phosphate (e.g., LiFePO₄ (or briefly referred to as LFP)), a composite material of lithium iron phosphate and carbon, lithium manganese phosphate (e.g., LiMnPO₄), a composite material of lithium manganese phosphate and carbon, lithium manganese iron phosphate, and a composite material of lithium manganese iron phosphate and carbon.

It may be understood that the battery is accompanied by the deintercalation and consumption of lithium (Li) during the charge and discharge process, and the content of Li in the positive electrode sheet varies when the battery is discharged to different states. In the listing of positive electrode materials in the present application, unless otherwise specified, the content of Li refers to that in an initial state of the material. When the positive electrode material is applied to a positive electrode sheet of a battery system, the content of Li in the positive electrode material contained in the sheet usually changes after charge and discharge cycles. The content of Li may be measured by molar content, but is not limited thereto. For the term "the content of Li refers to that in an initial state of the material", the initial state of the material refers to a state before being fed into a positive electrode slurry. It may be understood that new materials obtained by appropriately modifying the above-listed positive electrode materials are also within the scope of positive electrode materials. The aforementioned appropriate modification refers to acceptable modification methods for positive electrode materials, with a non-limiting example being coating modification.

For example, the positive electrode active material may include at least one of the following sodium-ion active materials: one or more of sodium transition metal oxides, polyanionic compounds, or Prussian blue compounds. However, the present application is not limited to these materials, and other conventionally known materials usable as positive electrode active materials for sodium-ion batteries may be used.

As an optional technical solution of the present application, transition metal in the sodium transition metal oxide may include one or more of Mn, Fe, Ni, Co, Cr, Cu, Ti, Zn, V, Zr, or Ce. Non-limiting examples of the sodium transition metal oxide may be NaₓMO₂, where M may include one or more of Ti, V, Mn, Co, Ni, Fe, Cr, or Cu, and 0<x≤1.

As an optional technical solution of the present application, polyanionic compounds may be a class of compounds having sodium ions, transition metal ions, and tetrahedral (YO₄)ⁿ⁻ anion units. The transition metal may include one or more of Mn, Fe, Ni, Co, Cr, Cu, Ti, Zn, V, Zr, or Ce. Y may be one or more of P, S, or Si, and n represents the valence state of (YO₄)ⁿ⁻. The polyanionic compounds may alternatively be a class of compounds having sodium ions, transition metal ions, tetrahedral (YO₄)ⁿ⁻ anion units, and halogen anions. The transition metal may include one or more of Mn, Fe, Ni, Co, Cr, Cu, Ti, Zn, V, Zr, or Ce. Y may be one or more of P, S, or Si, and n represents the valence state of (YO₄)ⁿ⁻. The halogen may be one or more of F, Cl, or Br. The polyanionic compounds may alternatively be a class of compounds having sodium ions, tetrahedral (YO₄)ⁿ⁻ anion units, polyhedral unit (ZO_{y})^{m+}, and optional halogen anions. Y may be one or more of P, S, or Si, and n represents the valence state of (YO₄)ⁿ⁻. Z represents a transition metal, which may include one or more of Mn, Fe, Ni, Co, Cr, Cu, Ti, Zn, V, Zr, or Ce, and m represents the valence state of (ZO_{y})^{m+}. The halogen may be one or more of F, Cl, or Br. The polyanionic compounds may include one or more of NaFePO₄, Na₃V₂(PO₄)₃ (sodium vanadium phosphate, briefly referred to as NVP), Na₄Fe₃(PO₄)₂(P₂O₇), NaM'PO₄F, or Na₃(VO_{y})₂(PO₄)₂F_{3-2y} (0≤y≤1). M' in NaM'PO₄F may include one or more of V, Fe, Mn, or Ni.

The Prussian blue compounds may be a class of compounds having sodium ions, transition metal ions, and cyanide ions (CN⁻). The transition metal may include one or more of Mn, Fe, Ni, Co, Cr, Cu, Ti, Zn, V, Zr, or Ce. Non-limiting examples of the Prussian blue compounds may be NaₐMe_{b}Me'_{c}(CN)₆, where Me and Me' may each independently be one or more of Ni, Cu, Fe, Mn, Co, or Zn, 0<a≤2, 0<b<1, and 0<c<1.

In some embodiments, the positive electrode film layer may optionally include a binder. Non-limiting examples of the binder may include one or more of polyvinylidene difluoride (PVDF), polytetrafluoroethylene (PTFE), a vinylidene difluoridetetrafluoroethylene-propylene terpolymer, a vinylidene difluoride-hexafluoropropylene-tetrafluoroethylene terpolymer, a tetrafluoroethylene-hexafluoropropylene copolymer, or a fluorine-containing acrylate resin.

In some embodiments, the positive electrode film layer may optionally include a conductive agent. Non-limiting examples of the conductive agent may include one or more of superconducting carbon, acetylene black, carbon black, Ketjen black, carbon dot, carbon nanotubes, graphene, or carbon nanofibers.

In some embodiments, the positive electrode sheet may be prepared as follows: dispersing the foregoing components for preparing the positive electrode sheet, for example, the positive electrode active material, the conductive agent, the binder, and any other components, in a solvent to form a positive electrode slurry; and coating the positive electrode slurry onto at least one side surface of a positive electrode current collector, followed by processes such as drying and cold pressing, to obtain the positive electrode sheet. The type of the solvent may be selected from, but not limited to, any one of those described in the aforementioned implementations, for example, N-methylpyrrolidone (NMP). The surface of the positive electrode current collector coated with the positive electrode slurry may be a single surface of the positive electrode current collector, or two surfaces of the positive electrode current collector. The surface of the positive electrode current collector coated with the positive electrode slurry may be a single surface of the positive electrode current collector, or two surfaces of the positive electrode current collector. A solid content of the positive electrode slurry may be 40 wt% to 80 wt%. A viscosity of the positive electrode slurry at room temperature may be adjusted to 5000 mPa·s to 25000 mPa·s. When coating the positive electrode slurry, a coating areal density in terms of dry weight (excluding the solvent) may be 15 to 35 mg/cm². A compaction density of the positive electrode sheet may be 3.0 g/cm³ to 3.6 g/cm³, optionally 3.3 g/cm³ to 3.5 g/cm³.

It may be understood that the negative electrode sheet in the battery cell is opposite to the positive electrode sheet. Further, the battery cell further includes a separator. The positive electrode sheet, the negative electrode sheet, and the separator may be formed into an electrode assembly by a winding process or a lamination process.

The negative electrode sheet includes a negative electrode current collector. Further, the negative electrode sheet may further include a negative electrode active material layer arranged on at least one surface of the negative electrode current collector. The negative electrode active material layer includes a negative electrode active material.

Non-limiting examples of the negative electrode current collector have two opposite surfaces in a thickness direction thereof. The negative electrode active material layer is arranged on either or both of the two opposite surfaces of the negative electrode current collector.

In some embodiments, the negative electrode current collector may use a metal foil or a composite current collector. For example, as the metal foil, a copper foil may be used. The composite current collector may include a polymer material substrate layer and a metal layer formed on at least one surface of a polymer material substrate. The composite current collector may be obtained by forming a metal material on the polymer material substrate. In the negative electrode current collector, non-limiting examples of the metal material may include one or more of copper, a copper alloy, nickel, a nickel alloy, titanium, a titanium alloy, silver, a silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some embodiments, the negative electrode active material may use a negative electrode active material for batteries well known in the art. Non-limiting examples of the negative electrode active material may include one or more of the following materials: artificial graphite, natural graphite, soft carbon, hard carbon, a silicon-based material, a tin-based material, lithium titanate, or the like. The silicon-based material may include one or more of elemental silicon, a silicon-oxygen compound, a silicon-carbon composite, a silicon-nitrogen composite, or a silicon alloy. The tin-based material may include one or more of elemental tin, a tin-oxygen compound, or a tin alloy. However, the present application is not limited to such materials, and other conventional materials capable of being used as a negative electrode active material for batteries may be used. These negative electrode active materials may be used alone or in combination of two or more.

In some embodiments, the negative electrode active material layer further optionally includes a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode active material layer may optionally include a conductive agent. The conductive agent may include one or more of superconducting carbon, acetylene black, carbon black, Ketjen black, carbon dot, carbon nanotubes, graphene, or carbon nanofibers.

In some embodiments, the negative electrode active material layer further optionally includes another additive, such as a thickener (e.g., sodium carboxymethyl cellulose (CMC-Na)).

In some implementations, the negative electrode sheet may be prepared as follows: dispersing the foregoing components for preparing the negative electrode sheet, for example, the negative electrode active material, the conductive agent, the binder, and any other components, in a solvent (non-limiting examples of the solvent are deionized water) to form a negative electrode slurry; and coating the negative electrode slurry on at least one side surface of the negative electrode current collector, followed by processes such as drying and cold pressing, to obtain the negative electrode sheet. The surface of the negative electrode current collector coated with the negative electrode slurry may be a single surface of the negative electrode current collector, or two surfaces of the negative electrode current collector. A solid content of the negative electrode slurry may be 40 wt% to 60 wt%. A viscosity of the negative electrode slurry at room temperature may be adjusted to 2000 mPa·s to 10000 mPa·s. When coating the negative electrode slurry, a coating areal density in terms of dry weight (excluding the solvent) may be 75 g/m² to 220 g/m². A compaction density of the negative electrode sheet may be 1.0 g/cm³ to 1.8 g/cm³.

The electrolyte is configured to wet the positive electrode sheet and the negative electrode sheet, and is capable of conducting ions between the positive electrode sheet and the negative electrode sheet. In addition to the foregoing electrolyte salt, the electrolyte further includes a solvent for dissolving the electrolyte salt.

In some embodiments, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate, fluoroethylene carbonate (FEC), methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone, or diethyl sulfone.

In some embodiments, the electrolyte further optionally includes an additive. For example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or lowtemperature property of the battery, and the like.

In some implementations, the additive in the electrolyte may include, but is not limited to, one or more of fluoroethylene carbonate (FEC), difluoroethylene carbonate (DFEC), trifluoromethyl ethylene carbonate (TFPC), or the like.

In some embodiments, the battery further includes a separator.

Generally, the battery includes a positive electrode sheet, a negative electrode sheet, an electrolyte, and a separator. During the charge and discharge process of the battery, active ions are intercalated and deintercalated back and forth between the positive electrode sheet and the negative electrode sheet. The electrolyte achieves an ion conducting effect between the positive electrode sheet and the negative electrode sheet. The separator is arranged between the positive electrode sheet and the negative electrode sheet to mainly play a role in preventing a short circuit between a positive electrode and a negative electrode while allowing ions to pass through.

The type of the separator is not specifically limited in the present application, and any well-known separator with a porous structure having good chemical stability and mechanical stability may be selected.

In some embodiments, the material of the separator may include one or more of glass fiber, non-woven cloth, polyethylene, polypropylene, or polyvinylidene fluoride. The separator may be a single-layer film or a multilayer composite film without special limitations. When the separator is a multi-layer composite thin film, the materials of the layers may be the same or different without special limitations.

In some embodiments, the thickness of the separator is 6 µm to 40 µm, and is optionally 12 µm to 20 µm.

In some embodiments, the positive electrode sheet, the negative electrode sheet, and the separator may be made into an electrode assembly by a winding process or a lamination process. The battery cell further includes a housing. The housing is configured to accommodate the foregoing electrode assembly.

The battery includes at least one battery cell. The battery may include one or more battery cells.

In the present application, unless otherwise specified, the term "battery cell" refers to a basic unit capable of converting chemical energy and electrical energy into each other. Further, the battery cell generally includes at least a positive electrode sheet, a negative electrode sheet, and an electrolyte. During the charge and discharge process of the battery, active ions are intercalated and deintercalated back and forth between the positive electrode sheet and the negative electrode sheet. The electrolyte achieves an active ion conducting effect between the positive electrode sheet and the negative electrode sheet.

A shape of the battery cell is not particularly limited in the present application, and may be a cylinder, a square, or in any other shape.

In some embodiments, the housing is in the shape of a square. The housing includes a case and at least one end cover. Further, the case has an opening at only one end, and the end cover covers the opening. Alternatively, further, the case has openings at both ends, and the two end covers cover the two openings of the case respectively.

In some embodiments, the housing is in the shape of a cylinder. The housing includes a case and at least one end cover. The end cover covers an opening of the case. Further, an outer diameter of the cylinder is greater than or equal to 30 millimeters. Further, the case has an opening at only one end, and the end cover covers the opening. Alternatively, the case has openings at both ends, and the two end covers cover the two openings of the case respectively.

In some embodiments, the housing is of a pouch-type structure. Further, the material of the housing includes an aluminum-plastic film.

For example, the battery shown in FIG. 1 is a battery cell, which shows an example of a battery cell with a square structure according to an example.

In some embodiments, the battery may include an outer package. The outer package may be configured to package the foregoing electrode assembly and electrolyte. In some embodiments, the outer package of the battery may be a hard case, such as a hard plastic case, an aluminum case, or a steel case. The outer package of the battery may be a soft pack, such as a pouch-type soft pack. The material of the soft pack may be plastic, and further, a non-limiting example of the plastic may include one or more of polypropylene, polybutylene terephthalate, and polybutylene succinate, etc.

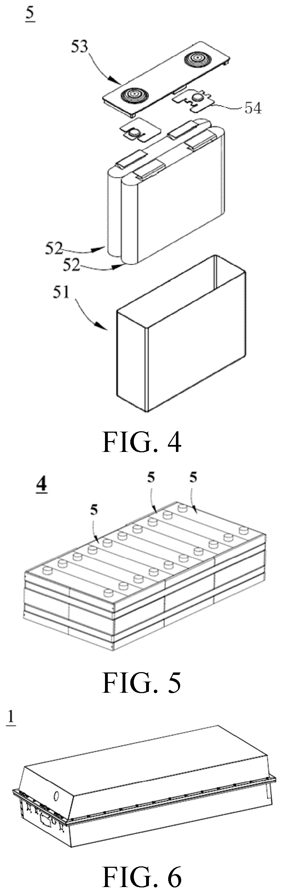

In some embodiments, referring to FIG. 4, the outer package may include a case 51 and a cover plate 53. The case 51 may include a bottom plate and a side plate connected to the bottom plate. An accommodating cavity is enclosed by the bottom plate and the side plate. The case 51 has an opening in communication with the accommodating cavity, and the cover plate 53 can cover the opening to close the accommodating cavity. The positive electrode sheet, the negative electrode sheet, and the separator may be made into an electrode assembly 52 by a winding process or a lamination process. The electrode assembly 52 is encapsulated in the accommodating cavity. The electrolyte is wet in the electrode assembly 52. The number of electrode assemblies 52 contained in the battery cell 5 may be one or more and may be selected by a person skilled in the art according to specific actual requirements.

In some embodiments, the battery may be a battery module or a battery pack. The battery module includes at least one battery cell. The number of battery cells contained in the battery module may be one or more. An appropriate number may be selected by a person skilled in the art based on the application and capacity of the battery module.

FIG. 5 shows a battery module 4 as an example. Referring to FIG. 5, in the battery module 4, a plurality of battery cells 5 may be arranged in sequence in a length direction of the battery module 4. Certainly, the plurality of battery cells may alternatively be arranged in any other manner. The plurality of battery cells 5 may be further fixed by fasteners.

Optionally, the battery module 4 may further include a housing having an accommodating space. The plurality of battery cells 5 are accommodated in the accommodating space.

In some embodiments, the battery module may further be assembled into a battery pack, the number of battery modules included in the battery pack may be one or more, and an appropriate number may be selected by a person skilled in the art based on the application and capacity of the battery pack.

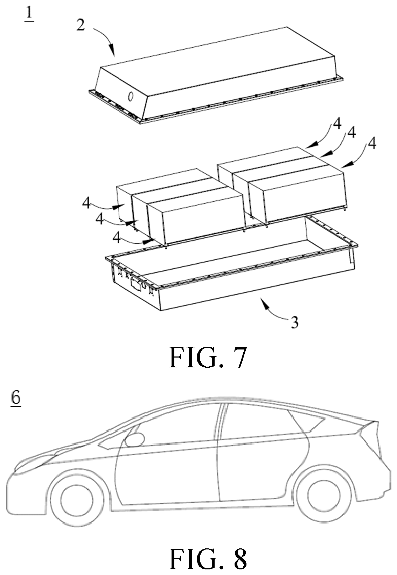

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The plurality of battery modules 4 may be arranged in the battery box in any way.

In addition, an implementation of the present application further provides an electric device. The electric device includes the foregoing battery of the present application. The battery may be used as a power source of the electric device, or may be used as an energy storage unit of the electric device. The electric device may include a mobile device, an electric vehicle, an electric train, a ship, a satellite, an energy storage system, and the like, but is not limited thereto. The mobile device may be, for example, a mobile may phone, and a laptop, etc.; and the electric vehicle may be, for example, without limitation, an all-electric vehicle, a hybrid electric vehicle, a plug-in hybrid electric vehicle, an electric bicycle, an electric scooter, an electric golf cart, and an electric truck, etc.

As the electric device, the battery may be selected according to the requirements during use.

FIG. 8 is an electric device 6 as an example. The electric device is an all-electric vehicle, a hybrid electric vehicle, a plug-in hybrid electric vehicle, or the like. To satisfy the need of the electric device for a high power and high energy density of batteries, a battery pack or a battery module may be used.

As another example, the device may be a mobile phone, a tablet computer, a notebook computer, or the like. The device generally requires light weight and thin appearance, and the battery may be used as a power supply.

The embodiments of the present application are described below. The embodiments described below are illustrative, are merely used to explain the present application, and should not be construed as a limitation to the present application. Where no specific technologies or conditions are indicated in the embodiments, the technologies or conditions described in the literature in the art or the instructions for the product are followed. The reagents or instruments without manufacturer indicated are all conventional products that may be purchased in the market.

### Embodiment 1

### (1) Preparation of Positive Electrode Sheet

In the preparation of a composite current collector, an aluminum metal layer and a protective layer were sequentially evaporated on two surfaces of a PET supporting layer to form a composite current collector, where a thickness of the supporting layer was 8 µm, a thickness of the aluminum metal layer on a single side is 1200 nm, the material of the protective layer is aluminum oxide, and a thickness of the protective layer on a single side is shown in Table 1.

A positive electrode slurry was prepared by dispersing a positive electrode active material (NCM₈₁₁ and NCM₅₂₃ with a mass ratio of 4:1 and a Dv50 of 5 µm), conductive carbon black SP, and a binder PVDF at a weight ratio of 98:1:1 in a solvent NMP and mixing uniformly. The positive electrode slurry was evenly coated on both side surfaces of the foregoing composite current collector, and a positive electrode sheet was obtained after drying and cold pressing, where a coating weight per unit area on both sides was 0.27 g/1540.25 mm².

### (2) Preparation of Negative Electrode Sheet

A negative electrode slurry was obtained by mixing a negative electrode active material (graphite), a thickener (sodium carboxymethyl cellulose), a binder (styrene-butadiene rubber), and a conductive agent (acetylene black) at a mass ratio of 97:1:1:1, adding deionized water, and stirring the mixture in a vacuum mixer. The negative electrode slurry was evenly coated on both side surfaces of a copper foil. The copper foil was air-dried at room temperature, then transferred to an oven and dried at 120°C for 1 h, and subsequently subjected to cold pressing and slitting to obtain a negative electrode sheet, where a coating weight per unit area on both sides was 0.17 g/1540.25 mm².

### (3) Separator

A polypropylene separator having a thickness of 12 µm was adopted.

### (4) Preparation of Electrolyte

In the preparation of an organic solvent, the organic solvent was a mixed solution containing ethylene carbonate (EC), ethyl methyl carbonate (EMC), and diethyl carbonate (DEC), where a volume ratio of EC to EMC to DEC was 20:20:60. In an argon atmosphere glove box with a water content lower than 10 ppm, a sufficiently dried lithium salt LiPF₆ was dissolved into the organic solvent, and uniform mixing was performed to obtain an electrolyte. A concentration of the lithium salt LiPF₆ in the electrolyte is shown in Table 1.

### (5) Preparation of Battery

The positive electrode sheet, the separator, and the negative electrode sheet were sequentially laminated, so that the separator was located between the positive electrode sheet and the negative electrode sheet to achieve a separation effect and then wound into a square bare battery cell to be charged into an aluminum-plastic film, baking was performed at 80°C for water removal, 10 g of the corresponding non-aqueous electrolyte was filled, opening sealing was performed, and a finished product battery was obtained after working procedures of still standing, hot and cold pressing, chemical formation, clamping, capacity grading, etc.

### Other Embodiments and Comparative Examples

Batteries of the other embodiments and comparative examples were prepared by a method similar to that of Embodiment 1, except that at least one of parameters including the thickness of the metal layer in the composite current collector, the concentration of lithium salt LiPF₆ in the electrolyte, and the thickness of the protective layer was different, as detailed in Table 1.

### A performance parameter test is provided below.

(1) A method for testing the content of free F⁻ in an electrolyte of a battery is as follows: The finished battery obtained after formation was disassembled, and the electrolyte therein was taken as a sample. The concentration of free halogen ions in the electrolyte was determined by ion chromatography, with the results shown in Table 1.

### (2) A method for testing high-temperature storage life is as follows:

(1.1) At 25°C±2°C, a fresh battery was discharged at a constant current of 0.33 C to 2.8 V, charged at a constant current of 0.33 C to 4.2 V, then charged at a constant voltage until the current was less than or equal to 0.05 C, and subsequently discharged at a constant current of 0.33 C to 2.8 V. An initial discharge capacity C0 of the battery was obtained through the test.

(1.2) The battery was charged at a constant current of 0.33 C to 4.2 V, then charged at a constant voltage until the current was less than or equal to 0.05 C, and the fully charged battery was placed in an oven for storage at 60°C±2°C.

(1.3) The battery was taken out of the oven at intervals of 7, 10, 15, 20, or 30 days, allowed to cool naturally to 25°C±2°C, and discharged at a constant current of 0.33 C to 2.8 V at this temperature to test the discharge capacity of the battery.

If a discharge capacity of the battery tested in step (1.3) was higher than 80% of the initial discharge capacity (C0) of the battery, steps (1.1) and (1.2) were repeated to prolong the storage time. The test was terminated until the discharge capacity of the battery decayed to 80% of the initial discharge capacity (C0) of the battery, and the storage time was recorded as the storage life of the battery (unit: days), which was rounded to an integer multiple of 10.

The cycle performance of the battery was characterized by the high-temperature storage life.

(3) A method for testing the growth rate of direct current resistance after storage for the corresponding time is as follows:
DCR test before storage: At 25°C±2°C, a fresh battery was charged at a constant current of 0.33 C to 4.2 V, then charged at a constant voltage until the current was less than or equal to 0.05 C, and discharged at a constant current of 0.33 C to 50% of C0 to adjust the battery to 50% of state of charge (SOC), with the voltage at this time recorded as V1. The battery was then discharged at a constant current of 4 C for 30 s, with the voltage at the end of discharge recorded as V2. Data sampling was performed every 10 s. DCR1=(V1-V2)/I, where I is 4C.

DCR test after storage: At 25°C±2°C, the battery that had reached the storage life was charged at a constant current of 0.33 C to 4.2 V, then charged at a constant voltage until the current was less than or equal to 0.05 C, and discharged at a constant current of 0.33 C to 50% of C0 to adjust the battery to 50% of SOC, with the voltage at this time recorded as V3. The battery was then discharged at a constant current of 4 C for 30 s, with the voltage at the end of discharge recorded as V4. Data sampling was performed every 10 s. DCR2=(V3-V4)/I, where I is 4C.

The growth rate of direct current resistance (%) was (DCR2-DCR1)/DCR1*100%.

The power performance of the battery was characterized by the growth rate of direct current resistance.

### (4) A method for testing electrode resistance after disassembly is as follows:

Batteries stored for the corresponding number of days under the conditions of Test (2) were disassembled to retrieve the cell in an environment with humidity less than 2%. The disassembled positive electrode sheet was required to have intact and undamaged roll-welding marks at tabs. A position adjacent to the tabs of the positive electrode sheet was cut into a concave shape, and an internal resistance meter was then used to measure a resistance value between the two tabs of the positive electrode, namely the electrode resistance after disassembly.

**Table 1**

| Items | Concentration A of LiPF₆ (mol/L) | Thickness of protective layer (nm) | Storage life (days) | Growth rate of direct current resistance | Electrode resistance after disassembly |
|---|---|---|---|---|---|
| Embodiment 1 | 1 | 40 | 710 | 33% | 65 mΩ |
| Embodiment 2 | 1 | 100 | 660 | 50% | 75 mΩ |
| Embodiment 3 | 1 | 3 | 500 | 71% | 85 mΩ |
| Embodiment 4 | 1 | 20 | 700 | 35% | 67.5 mΩ |
| Embodiment 5 | 1.5 | 20 | 680 | 45% | 72.5 mΩ |
| Embodiment 6 | 0.5 | 20 | 530 | 65% | 75 mΩ |
| Embodiment 7 | 2 | 20 | 510 | 70% | 85 mΩ |
| Comparative Example 1 | 0.1 | / | 80 | 120% | 110 mΩ |

It can be seen from Table 1 that compared with Comparative Example 1 without a protective layer, the batteries of Embodiments 1 to 7 had a significantly higher storage life, along with a lower growth rate of direct current resistance and lower electrode resistance after disassembly, indicating that the provision of a protective layer in each embodiment effectively improved the cycle performance and power performance of the battery. In addition, each embodiment improved the mass energy density of the battery compared with a pure metal current collector.

It can be seen from Embodiments 1 to 4 that when the thickness of the protective layer was within the range of 3 nm to 100 nm, all batteries exhibited good cycle life and power performance. Further, the cycle performance and power performance of the battery were improved when the thickness of the protective layer was further controlled within 20 nm to 40 nm.

It can be seen from the comparison between Embodiments 4 to 7 that based on the protective layer having a thickness of 3 nm to 100 nm, all batteries exhibited good cycle life and power performance when the concentration of the lithium salt in the electrolyte was 0.5 mol/L to 2 mol/L. Further, the life and power performance of the battery were further improved when the concentration of the lithium salt in the electrolyte was 0.5 mol/L to 1.5 mol/L, or 1 mol/L to 1.5 mol/L.

### Embodiments 8 to 12

The embodiments were substantially the same as Embodiment 1, with the only differences being the thickness of the protective layer of the composite current collector in the positive electrode sheet and the preparation step of the electrolyte. Specifically, the thickness of the protective layer and the concentration of free F⁻ in the electrolyte were different, as detailed in Table 2.

The preparation step of the electrolyte was specifically as follows: The organic solvent was a mixed solution containing ethylene carbonate (EC), ethyl methyl carbonate (EMC), and diethyl carbonate (DEC), where a volume ratio of EC to EMC to DEC was 20:20:60. In an argon atmosphere glove box with a water content lower than 10 ppm, a sufficiently dried lithium salt LiPF₆ (lithium hexafluorophosphate) was dissolved into the organic solvent, and uniform mixing was performed to obtain an electrolyte. The concentration of lithium salt LiPF₆ in each embodiment was controlled to vary within the range of 0.5 mol/L to 2 mol/L, and the water content in the electrolyte was slightly different, which in turn resulted in the variation of the concentration of free F⁻ in the electrolyte of each embodiment.

**Table 2**

| Items | Concentration of free F⁻ (mg/L) | Thickness of protective layer (nm) | Storage life (days) | Growth rate of direct current resistance | Electrode resistance after disassembly |
|---|---|---|---|---|---|
| Embodiment 8 | 200 | 40 | 470 | 52% | 74 mΩ |
| Embodiment 9 | 50 | 40 | 720 | 32% | 64.5 mΩ |
| Embodiment 10 | 20 | 40 | 740 | 29% | 62 mΩ |
| Embodiment 11 | 0.5 | 40 | 730 | 31% | 63 mΩ |
| Embodiment 12 | 20 | 3 | 630 | 45% | 73 mΩ |

It can be seen from Table 2 that compared with Comparative Example 1, the batteries of Embodiments 8 to 12 had a significantly higher storage life, along with a lower growth rate of direct current resistance and lower electrode resistance after disassembly, indicating that the batteries of Embodiments 8 to 12 had good cycle performance and power performance.

It can be seen from Embodiments 8 to 11 that when Embodiments 9 to 11 controlled the concentration of free F⁻ in the electrolyte within the range of 0.5 mg/L to 50 mg/L, the storage life of the batteries was significantly prolonged and the growth rate of direct current resistance was significantly reduced. To be specific, the cycle life and power performance of the batteries were further enhanced.

It can be seen from Embodiments 10 and 12 that based on the concentration of free F⁻ in the electrolyte within the foregoing concentration range, the thickness of the protective layer is controlled within 20 nm to 100 nm and further within 20 nm to 40 nm, thereby further improving the cycle life and power performance of the batteries.

The various technical features of the foregoing embodiments may be combined in any manner. For the sake of brevity, not all possible combinations of the technical features in the foregoing embodiments have been described. However, any combination of these technical features shall be considered within the scope of this specification, provided that no contradiction arises.

The foregoing embodiments merely express several implementations of this application. The descriptions thereof are relatively specific and detailed, but should not be understood as limitations to the scope of this application. It should be noted that for a person of ordinary skill in the art, several transformations and improvements can be made without departing from the idea of the present application. These transformations and improvements belong to the protection scope of the present application. Therefore, the protection scope of the patent of the present application shall be subject to the appended claims.

## Claims

1. A battery cell, comprising:
an electrolyte, wherein the electrolyte contains an electrolyte salt, and the electrolyte salt comprises a salt capable of releasing free halogen ions during use of the battery cell; and
a positive electrode sheet, wherein the positive electrode sheet comprises a composite current collector and a positive electrode film layer arranged on at least one side of the composite current collector, the composite current collector comprises a supporting layer and a metal layer arranged on at least one side of the supporting layer, a protective layer is arranged on at least one side of the metal layer, and the protective layer comprises a metal oxide.

2. The battery cell according to claim 1, wherein the electrolyte salt in the electrolyte has a concentration of 0.5 mol/L to 2 mol/L.

3. The battery cell according to claim 1, wherein the electrolyte salt in the electrolyte has a concentration of 1 mol/L to 1.5 mol/L.

4. The battery cell according to claim 1, wherein the protective layer has a thickness of 3 nm to 100 nm.

5. The battery cell according to any one of claims 1 to 4, wherein the protective layer has a thickness of 5 nm to 50 nm.

6. The battery cell according to any one of claims 1 to 5, wherein the protective layer has a thickness of 15 nm to 45 nm.

7. The battery cell according to any one of claims 1 to 6, wherein the metal oxide comprises at least one of aluminum oxide, tin oxide, or silicon oxide.

8. The battery cell according to claim 7, wherein two side surfaces of the metal layer are separately provided with the protective layer; the protective layer on a surface of the metal layer facing away from the supporting layer is a first protective layer, and the first protective layer has a thickness of D1; the protective layer on a surface of the metal layer facing the supporting layer is a second protective layer, and the second protective layer has a thickness of D2; and D1≥D2.

9. The battery cell according to any one of claims 1 to 8, wherein the protective layer on the surface of the metal layer facing away from the supporting layer is a first protective layer, the positive electrode film layer is arranged on the first protective layer, a volume-average particle size Dv50 of a positive electrode active material in the positive electrode film layer is larger than the thickness of the first protective layer, and at least part of the positive electrode active material in the positive electrode film layer penetrates the first protective layer.

10. The battery cell according to claim 9, wherein the composite current collector has recessed portions recessed from the first protective layer toward the supporting layer, the volume-average particle size Dv50 of the positive electrode active material is less than or equal to an average depth of the recessed portions, and at least part of the recessed portions are filled with the positive electrode active material.

11. The battery cell according to any one of claims 1 to 10, wherein the material of the metal layer comprises an aluminum metal material.

12. The battery cell according to claim 11, wherein the metal layer comprises at least one of an aluminum elementary substance layer or an aluminum alloy layer.

13. The battery cell according to any one of claims 1 to 12, wherein the metal layer has a thickness of 500 nm to 4000 nm.

14. The battery cell according to claim 13, wherein the metal layer has a thickness of 700 nm to 1500 nm.

15. The battery cell according to any one of claims 1 to 14, wherein the free halogen ions comprise at least one of F⁻, Cl⁻, Br⁻, or I⁻.

16. The battery cell according to any one of claims 1 to 15, wherein the electrolyte salt comprises a fluorine-containing lithium salt.

17. The battery cell according to claim 16, wherein the fluorine-containing lithium salt comprises one or more of lithium hexafluorophosphate, lithium bis(fluorosulfonyl)imide, lithium tetrafluoroborate, lithium hexafluoroarsenate, lithium bis(trifluoromethanesulfonyl)imide, lithium trifluoromethanesulfonate, lithium difluorophosphate, lithium difluorooxalate borate, lithium difluorodioxalate phosphate, or lithium tetrafluorooxalate phosphate.

18. The battery cell according to any one of claims 1 to 17, wherein the material of the supporting layer comprises a polymer material.

19. The battery cell according to any one of claims 1 to 18, wherein the supporting layer has a thickness of 5 µm to 20 µm.

20. The battery cell according to any one of claims 1 to 19, wherein the battery cell comprises a housing, a negative electrode sheet, and a separator, the positive electrode sheet, the negative electrode sheet, and the separator form an electrode assembly through a winding process or a lamination process, and the housing is configured to accommodate the electrode assembly.

21. The battery cell according to claim 20, wherein the housing is in the shape of a square, and the housing comprises a case and at least one end cover;
the case has an opening at only one end, and the end cover covers the opening; or
the case has openings at both ends, and the two end covers cover the two openings of the case respectively.

22. The battery cell according to claim 20, wherein the housing is of a pouch-type structure, and the material of the housing comprises an aluminum-plastic film.

23. The battery cell according to claim 20, wherein the housing is in the shape of a cylinder, the housing comprises a case and at least one end cover, the end cover covers an opening of the case, and an outer diameter of the cylinder is greater than or equal to 30 millimeters.

24. A battery, comprising one or more battery cells according to any one of claims 1 to 23.

25. An electric device, comprising at least one of the battery cell according to any one of claims 1 to 23 or the battery according to claim 24.
